(19) **Europäisches Patentamt / European Patent Office / Office européen des brevets**

(11) **EP 4 556 952 A1**

(12) # EUROPEAN PATENT APPLICATION

(43) Date of publication:
**21.05.2025 Bulletin 2025/21**

(21) Application number: **23210219.4**

(22) Date of filing: **15.11.2023**

(51) International Patent Classification (IPC):
$G01S\ 13/60^{(2006.01)}$    $G01S\ 13/86^{(2006.01)}$
$G01S\ 13/931^{(2020.01)}$    $B60W\ 40/072^{(2012.01)}$
$B60W\ 40/076^{(2012.01)}$    $G01S\ 7/295^{(2006.01)}$
$G01S\ 13/62^{(2006.01)}$    $G01C\ 21/16^{(2006.01)}$
$B60W\ 40/10^{(2012.01)}$

(52) Cooperative Patent Classification (CPC):
**G01S 13/931; B60W 30/02; B60W 40/10;**
**B60W 50/0097; G01C 21/16; G01S 7/295;**
**G01S 13/42; G01S 13/60; G01S 13/62;**
**G01S 13/86;** B60W 2300/12; B60W 2556/35;
B60W 2710/207; B60W 2720/26; B60W 2720/28;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **JONASSON, Mats**
  **433 49 Partille (SE)**
• **RYDSTRÖM, Mats**
  **427 39 Billdal (SE)**

(74) Representative: **Ström & Gulliksson AB**
**P.O. Box 4188**
**203 13 Malmö (SE)**

Remarks:
Claims filed after the date of filing of the application
(Rule 68(4) EPC).

(54) **MULTI-FRAME VEHICLE MOTION ESTIMATION USING RADAR AND IMU**

(57) A computer-implemented method for controlling motion of a vehicle (100, 700), the method comprising configuring (S1) a ground speed radar system (201-206, 500, 600) arranged to measure motion of the vehicle (100, 700) relative to a ground surface (101) supporting the vehicle (100, 700) in a ground surface reference frame, and an inertial measurement unit, IMU, system (210) arranged to measure motion of the vehicle (100, 700) in a vehicle reference frame,
obtaining (S2) radar data $(\dot{\theta}_r, V_r)$ from the radar system and IMU data $(\omega, a)$ from the IMU system,
determining (S3) motion by the vehicle (100, 700) in the ground surface (101) reference frame based on the radar data $(\dot{\theta}_r, V_r)$,
determining (S4) motion by the vehicle (100, 700) in the vehicle reference frame based on the IMU data $(\omega, a)$,
identifying (S5) an orientation of the ground surface (101) relative to a horizontal plane, based on joint processing of the radar data $(\dot{\theta}_r, V_r)$ and on the IMU data $(\omega, a)$, and controlling (S7) the motion of the vehicle (100, 700) based at least in part on the orientation of the ground surface (101) relative to gravity (g).

FIG. 1

**(Cont. next page)**

(52) Cooperative Patent Classification (CPC): (Cont.)
B60W 2720/30; G01C 21/165

## EP 4 556 952 A1

### Description

### TECHNICAL FIELD

This disclosure relates generally to motion estimation for heavy-duty vehicles such as rigid trucks and semi-trailers. In particular aspects, the disclosure relates to vehicle motion estimation based on data from radar transceivers and from at least one inertial measurement unit (IMU) mounted on the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Many modem vehicles comprise advanced driver assistance systems (ADAS) and other safety-enhancing functions such as emergency braking and traction control that provide automated or at least semi-automated control of vehicle motion control actuators, e.g., propulsion devices, brakes, and steering actuators. This type of automated actuator control on a vehicle requires accurate and reliable information about the current motion of the vehicle, since otherwise it cannot be determined if the vehicle moves in a desired manner or not, i.e., if actuator intervention is required. Fully autonomous vehicles place even higher requirements on the availability of accurate and reliable motion information.
Vehicle motion estimation techniques based on the output of wheel speed sensors and inertial measurement units (IMUs) are known. Advanced motion estimation techniques also rely on models of vehicle dynamics to estimate current vehicle motion and also to predict future vehicle motion. However, there is a continuing desire to improve methods for vehicle motion estimation.

### SUMMARY

According to a first aspect of the disclosure, there is presented a computer-implemented method and corresponding processing circuitry for controlling motion of a vehicle. The method comprises configuring a ground speed radar system arranged to measure motion of the vehicle relative to a ground surface supporting the vehicle in a ground surface reference frame (relative to the ground surface), and an IMU system arranged to measure motion of the vehicle in a vehicle reference frame, i.e., relative to the vehicle. The method also comprises obtaining radar data from the radar system and IMU data from the IMU system, determining motion by the vehicle in the ground surface reference frame based on the radar data, determining motion by the vehicle in the vehicle reference frame based on the IMU data, and identifying an orientation of the ground surface relative to a horizontal plane based on joint processing of the radar data and the IMU data. The method furthermore comprises controlling the motion of the vehicle based at least in part on the orientation of the ground surface relative to gravity. The first aspect of the disclosure may seek to control a vehicle more accurately by also accounting for the orientation of the ground surface supporting the vehicle relative to the horizontal plane or relative to some other gravity-related reference plane. This way road slope can be accounted for in the overall vehicle motion management, which is an advantage. The road slope also affects vehicle stability, hence the methods and control units disclosed may provide an increase in vehicle stability.
Some aspects of the present disclosure also relates to vehicle motion estimation, and in particular to a computer-implemented method for estimating an orientation of a ground surface and/or a vehicle supported thereon relative to a horizontal plane. The method comprises configuring a ground speed radar system arranged to measure motion of the vehicle relative to the ground surface supporting the vehicle in a ground surface reference frame, and an IMU system arranged to measure motion of the vehicle in a vehicle reference frame. As above, the method comprises obtaining radar data from the radar system and IMU data from the IMU system, determining motion by the vehicle in the ground surface reference frame based on the radar data, determining motion by the vehicle in the vehicle reference frame based on the IMU data, and identifying an orientation of the ground surface and/or the vehicle relative to the horizontal plane, based on joint processing of the radar data and on the IMU data. The method may comprise generating an output signal comprising the orientation of the ground surface and/or the vehicle relative to the horizontal plane.
According to an example, the method comprises identifying an orientation change rate of the ground surface with respect to a driven distance, i.e., how fast the road slope is changing, based on joint processing of the radar data and the IMU data. This provides even more information about the characteristics of the ground surface, which information can be used to improve vehicle control. This can also be used to improve prediction of vehicle motion.
According to an example, the method comprises controlling the motion of the vehicle based at least in part on the orientation change rate of the ground surface relative to gravity. The information on orientation rate change improves many aspects of vehicle control, in particular predictive motion control which control vehicle actuators to compensate for an upcoming change in driving conditions, such as an onset of a significant road slope. Traction control can also be improved by the herein disclosed methods, such as launch in difficult uphill road conditions.

According to an example, the method comprises configuring the ground speed radar system with a plurality of radar transceivers arranged directed at the ground surface. The different radar transceivers are spatially separated and therefore observe different parts of the ground surface. This gives a more stable system with better output data. However, a single advanced antenna array radar transceiver can also be used with advantage, i.e., the method may comprise configuring at least one radar transceiver of the ground speed radar system with an antenna array. The antenna array can illuminate different parts of the road surface, i.e., measure radial velocity and distance to the road surface in several different azimuth and elevation angles, providing more data than a single transmission lobe radar transceiver is capable of.

According to an example, the method comprises configuring at least one radar transceiver with a respective and co-located IMU. This way the IMU data and the radar data is obtained at the same place on the vehicle, i.e., at the same coordinates in the vehicle reference frame, avoiding the need for translation of the data to account for spatial separation between IMU and radar transceiver. It is an advantage that the coordinate translation is avoided since this can introduce errors from uncertainty in radar transceiver and IMU mounting.

According to an example, the method comprises determining motion by the vehicle in the vehicle reference frame based on joint processing of the radar data and the IMU data. The joint processing may comprise processing by a common signal processing filter, i.e., sensor fusion. More simple analytical methods can also be applied, as well as more advanced methods, as will be explained in the following.

According to an example, the method comprises determining motion by the vehicle in an Inertial reference frame based on joint processing of the radar data and the IMU data and/or determining motion by the vehicle in the ground surface reference frame based on joint processing of the radar data and the IMU data.

According to preferred aspects, the method comprises determining motion by the vehicle based on joint processing of the radar data and the IMU data, and also on a model of vehicle dynamics associated with the vehicle. The model of vehicle dynamics may, e.g., comprise a bicycle model or more advanced vehicle dynamics models. The joint processing of the radar data and the IMU data can for instance be based on processing by a Kalman filter, an extended Kalman filter, or a Particle filter.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings, where:

Figure 1 illustrates an exemplary vehicle according to some of the teachings herein.

Figure 2 schematically illustrates a vehicle with a plurality of ground radar sensors.

Figure 3 illustrates a vehicle pose relative to road surface and horizontal planes.

Figures 4A-C shows different reference frames for defining vehicle motion.

Figures 5-6 show two types of ground radar antenna arrangements.

Figure 7 illustrates a heavy-duty vehicle with an advanced ground radar system.

Figure 8 shows an overview of an example vehicle motion management system.

Figure 9 is a flow chart that illustrates exemplary methods.

Figure 10 is a schematic diagram of an exemplary computer system.

## DETAILED DESCRIPTION

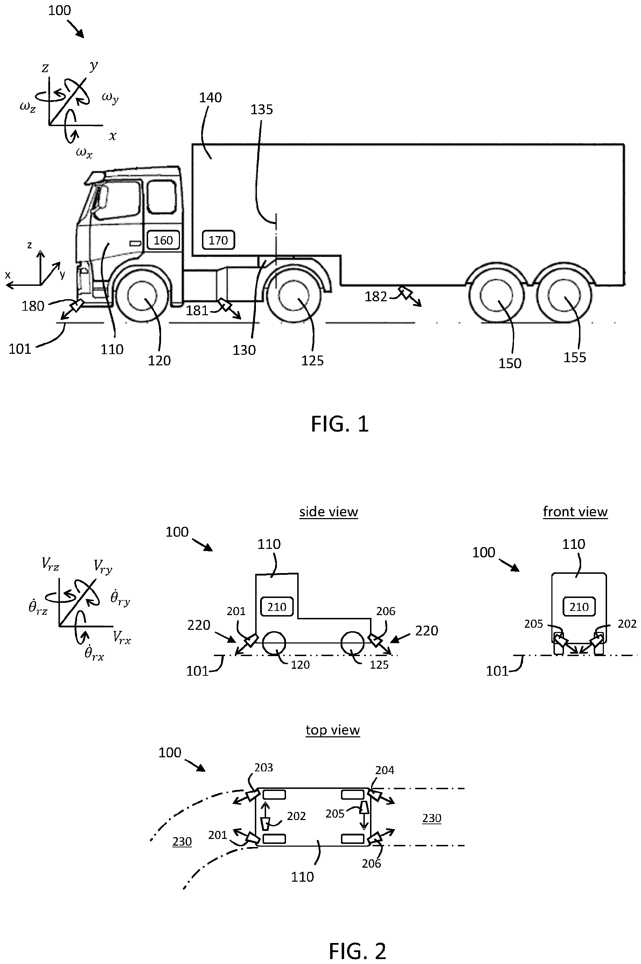

Figure 1 illustrates an example heavy-duty vehicle 100, here in the form of a semitrailer vehicle with a tractor 110 arranged to tow a trailer 140. It is, however, appreciated that the methods and control units disclosed herein can be applied with advantage also in other types of heavy-duty vehicles, such as rigid trucks, other types of articulated vehicles, trucks with drawbar connections, construction equipment such as wheel loaders and articulated haulers, buses, and so on. The vehicle 100 may also comprise more than two vehicle units. A dolly vehicle unit may for instance be used to tow more than one trailer. Aspects of the disclosure are also applicable in passenger cars and in recreational vehicles.

The example vehicle 100 illustrated in Figure 1 comprises a tractor 110 with a front steered axle and a rear axle. The example tractor 110 illustrated in Figure 1 comprises a pair of front wheels 120 and a pair of rear wheels 125. The tractor 110 has a fifth wheel connection 130 to which the trailer 140 is connected, such that it can rotate about a coupling axis 135. The trailer 140 comprises two rear axles with wheels 150, 155. The tractor 110 and the trailer 140 are both supported on a ground surface 101. The ground surface 101 can be a paved road surface, a gravel road surface, a surface at a construction site, a surface at a quarry, a deposit ground, or the like.

It is appreciated that the ground surface 101 is not always perfectly planar, but often uneven to some degree. A paved road surface is normally more even than a gravel road with potholes, wheel tracks, and the like, and a quarry ground surface may be even less planar. Herein, when discussing the orientation of the ground surface 101 relative to the gravity vector or the Earth horizontal plane, it is assumed that the ground surface 101 approximately coincides with a plane that intersects the contact surfaces between the wheels of the vehicle 100 and the ground surface 101, at least approximately.

The gravity vector, as used herein, corresponds approximately to the perpendicular line of equipotential surface of gravity on Earth. It is understood that the Earth's equipotential surface of gravity is very complex, and the equipotential surface of reference ellipsoid model such as WGS-84, is used to approximate the Earth's equipotential surface of gravity. The gravity of Earth, denoted herein by $g$, is the net acceleration that is imparted to objects due to the combined effect of gravitation (from mass distribution within Earth) and the centrifugal force (from the Earth's rotation). In SI units this acceleration is expressed in meters per second squared (m/s$^2$) or equivalently in newtons per kilogram (N/kg). Near Earth's surface, the acceleration due to gravity, accurate to three significant figures, is 9.81 m/s$^2$. The gravity vector is approximately normal to the horizontal plane, at least in a local area.

The ground surface 101 may have an angle relative to the horizontal plane. In the case of a planar road surface, this angle or inclination is often referred to as road slope in the longitudinal direction and road banking in the lateral direction. Both road slope and road banking can be given as an average angle between the road and the horizontal plane measured over some local area. The road slope can be both positive (uphill slope) and negative (downhill slope). The angle or inclination of the ground surface 101 relative to Earths horizontal plane translates into a pose of the vehicle 100 relative to the horizontal plane, i.e., the inclination of the road surface normally is the same as the inclination of the vehicle 100 supported thereon, at least in an average sense.

The vehicle 100 comprises one or more control units 160, 170 arranged to control various functions on the vehicle 100 and to receive data from sensors arranged on the vehicle 100, which provide information about the vehicle surroundings and the motion of the vehicle 100 as it moves through the local environment. Some common sensor types include wheel speed sensors that measure rotation speeds of the wheels, global positioning system (GPS) sensors that measure a position of the vehicle on the surface of the Earth, vision-based sensors such as cameras and lidar sensors arranged for environment perception, as well as one or more radar transceiver systems.

Figure 1 illustrates $x$, $y$ and $z$ axes in a vehicle reference frame or coordinate system. The $x$-axis is directed in the longitudinal direction of the vehicle 100, while the $y$-axis is lateral with respect to the longitudinal direction. The $z$-axis is perpendicular to both the $x$ and $y$ axes. A rotation about an axis in the vehicle reference frame will be denoted $\omega_i$, where subscript $i$ denotes the axis. The speed over ground along the different axes in the vehicle reference frame will be denoted as $v_x$, $v_y$, $v_z$, and respective accelerations by $a_x$, $a_y$, $a_z$. The axes may be defined relative to the vehicle chassis, so as to span a plane which intersects the chassis.

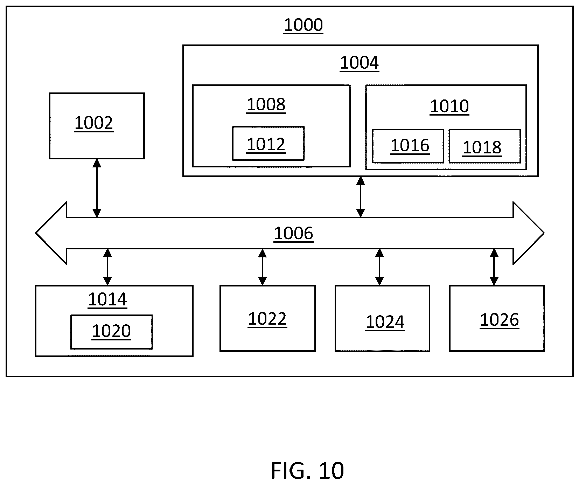

Each control unit 160, 170 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to the example provided in Figure 10.

As mentioned above, it is often desired to understand how the vehicle 100 moves over the ground surface 101 and also in relation to the gravity vector $g$. However, the speed over ground $v_x$, $v_y$, $v_z$ of the different wheels (and of the vehicle) may be difficult to obtain with sufficient precision given current state-of-the art techniques. For instance, if wheel speed sensors such as Hall effect sensors or rotational encoders are used to determine vehicle speed over ground, then the vehicle speed over ground will be erroneously determined in case the wheels used for estimating the speed over ground are slipping relative to the ground surface 101. Also, vehicle speed over ground determined based on wheel rotation is one-dimensional, i.e., the method does not allow determining a wheel lateral speed over ground $v_y$ in addition to the longitudinal speed over ground $v_x$, i.e., a speed vector in two dimensions.

Satellite based positioning systems can be used to determine the speed over ground of a heavy-duty vehicle 100 and of any given wheel on the vehicle 100. However, these systems do not function well in some environments, such as environments without a clear view of the sky. Multipath propagation of the satellite radio signals can also induce large errors in the estimated vehicle position, which then translates into errors in the estimated vehicle speed over ground.

Vision-based sensor systems and radar systems can also be used to determine vehicle speed over ground. However, such systems are relatively costly and not always without issues when it comes to accuracy and reliability. Vision-based sensor may for instance suffer from performance degradation due to sun glare while radar sensor systems may be prone to interference from other radar transceivers.

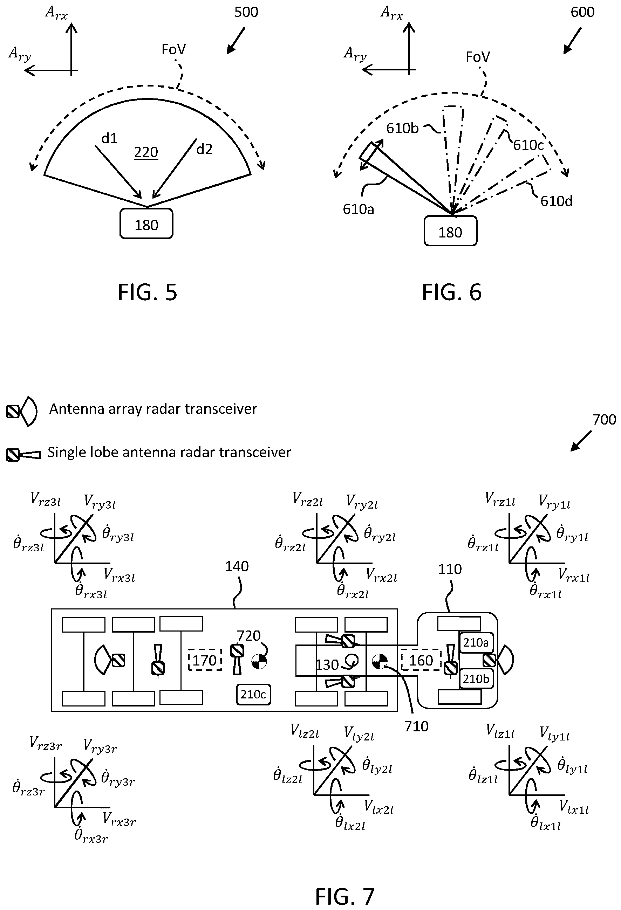

The present disclosure proposes the use of radar to determine at least longitudinal and lateral velocity of a vehicle with respect to the ground surface 101, as well as yaw rate, pitch rate and roll rate in the coordinate system of the ground surface 101, referred to herein as a ground surface reference frame. The vehicle 100 therefore comprises a ground radar system with a plurality of ground radar transceivers 180, 181, 182. Each ground radar transceiver comprises a respective antenna arrangement directed towards the ground surface 101. Alternatively, a single radar transceiver with an advanced antenna array capable of illuminating the ground surface in several azimuth angles and elevation angles can be used, as will be explained in more detail below in connection to Figure 5 and Figure 6.

A ground speed radar system is, generally, a system comprising at least one radar transceiver arranged to illuminate a plurality of regions of the ground surface, and to measure at least radial velocity of the radar transceiver relative to the different illuminated regions of ground surface. The radar transceiver or transceivers preferably also measures distance from the radar transceiver or transceivers to the illuminated regions on the ground surface. The ground speed radar system does not necessarily illuminate the vehicle environment above the road surface, although this is a possibility in some cases.

The use of ground speed radar transceivers to determine the speed over ground of a vehicle has been proposed previously, see, e.g., US 2004/0138802 and WO2023169652A1. However, its use in combination with the output data from one or more IMUs, to determine vehicle motion in more than one coordinate system, and to estimate Euler angles, has to the best of our knowledge not been described previously.

With reference to Figure 2, radar transceivers 201, 202, 203, 204, 205, 206 can be configured to determine a motion state of the vehicle 100 with respect to the ground surface 101 supporting the vehicle 100. This type of radar system comprises at least one radar transceiver arranged to transmit and to receive a radar signal 220 via an antenna arrangement. As the vehicle moves over the ground surface 101 a Doppler shift occurs in the backscatter from the road surface that is received by the radar transceiver. A radial velocity indicating a speed between the radar transceiver and ground can be determined by this Doppler shift in a known manner. Given a sufficient number of such radial velocities, pointing in different directions, the vehicle speed relative to the ground surface and also the yaw rate of the vehicle 100 can be determined. Each, or a subset of, the radar transceivers 201-106 can also be configured to measure a range from the radar transceiver to the respective illuminated region of the ground surface 101. These ranges can be used to determine pitch angle, roll angle, pitch rate, and roll rate, since these motions will give rise to changes in the distance from the radar transceivers to ground, in a known manner. See, e.g., US 2004/0138802 and WO2023169652A1.

Generally, herein, a time derivative will be denoted by a dot, i.e.,

$$\dot{v}_x = \frac{d}{dt} v_x(t)$$

Angular rates relative to the ground surface 101 will be denoted $\dot{\theta}_r = [\dot{\theta}_{rx} \, \dot{\theta}_{ry} \, \dot{\theta}_{rz}]^T$ rad/s, accelerations $\boldsymbol{A}_r = [A_{rx} \, A_{ry} \, A_{rz}]^T$ m/s$^2$ and translational speeds $\boldsymbol{V}_r = [V_{rx} \, V_{ry} \, V_{rz}]^T$. In this application, a system of radars can be configured to measure both $\dot{\theta}_r$ and $\boldsymbol{V}_r$. Some of the sensor systems described herein are configured to measure a complete vehicle motion state in a reference frame, while other sensor systems are configured to measure only part of the vehicle motion state.

Each radar transceiver 201-206 is arranged to transmit a radar signal 220 over a radar bandwidth, where a larger bandwidth improves range resolution in a known manner. Velocity resolution depends on the radar wavelength and the repetition period of the waveform in a known manner. According to some aspects, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an FMCW radar signal format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. A good overview of rudimentary FMCW radar processing is given in the lecture notes "Introduction to mmwave Sensing: FMCW Radars" by Sandeep Rao, Texas Instruments, 2017. The Doppler frequency at the range corresponding to the distance between the radar transceiver and ground is indicative of the radial speed at which the ground moves relative to the radar transceiver, as explained in US 2004/0138802 and also in WO2023169652A1. Surface penetrating radar systems are also known which can be used in this application.

Figure 2 illustrates an example vehicle 100 with six radar transceivers 201-206. It is noted that the teachings herein are applicable also for fewer or more radar transceivers. Figure 2 shows a side view, a front view, and a top view of the same vehicle 100. In this case each transceiver comprises a single fixed transmission lobe antenna arrangement. However, particular advantages may be obtained by the use of antenna arrays, as will be discussed on more detail below in connection to Figure 5 and Figure 6. The radar system in Figure 2 can as mentioned above be used to measure both $\dot{\theta}_r$ and $V_r$ in the reference system of the ground surface 101, i.e., in a ground surface reference frame.

Each radar transceiver 201-206 illuminates a relatively small portion of the ground surface 101. Various illumination patterns can be selected, but it is an advantage if the illuminated portion of the ground surface by a given radar transceiver is close to a wheel and relatively small in size, since then a more specific wheel motion relative to the ground surface can be obtained. It is an advantage if each radar transceiver is directed towards a portion of the ground surface 101 located within a future, current, or past region 230 covered by the vehicle, as shown in Figure 2 top view, since disturbance may be caused by objects to the side of the vehicle, such as other vehicle, road guard rails, and other obstacles.

The vehicle 100 also comprises at least one IMU 210. An IMU is an electronic device that measures and reports a body's specific force, angular rate, and sometimes the orientation of the body, using a combination of accelerometers, gyroscopes, and sometimes also magnetometers. An IMU generally measures accelerations $a_x$, $a_y$, $a_z$ along $x, y, z$ axes in the vehicle reference frame, and also yaw rates $\omega_x$, $\omega_y$, $\omega_z$ about each axis in the vehicle reference frame. The $x$-axis of the vehicle reference frame is pointing in the vehicle longitudinal direction, the $y$-axis points in the lateral direction (to the left when facing forwards), and the $z$-axis is pointing upwards in a direction that is normal to the wheelbase plane spanned by the $x$ and $y$ axes. Angular rates about the axes in the vehicle reference frame are denoted $\omega = [\omega_x\ \omega_y\ \omega_z]^T$ rad/s and accelerations along the axes are denoted $a = [a_x\ a_y\ a_z]^T$ m/s². The translational speeds are denoted by $v = [v_x\ v_y\ v_z]^T$. Each IMU 210 on the vehicle is measuring $\omega$ and $a$, although it is noted that the position of the IMU on the vehicle will have an impact on the output of the IMU. The output from each IMU will be affected by the pose of the IMU relative to the gravity vector, as will be explained in the following.

Today, motion estimation in many vehicles, such as the vehicle 100 discussed above in connection to Figure 1, primarily relies on using IMUs and wheel speed sensors to determine vehicle motion. The wheel speed sensors provide information about how fast the wheel rotates, and this may or may not correspond to the speed of the vehicle relative to the ground surface 101, depending on if the wheel is slipping relative to the surface or not. The IMU 210 provides motion data in the vehicle reference frame, i.e., $\omega$ and $a$. With reference frame means here that IMU 210 measures in the vehicle's coordinate system using the earth as a reference. However, the output from the IMU is affected by the gravity vector (in a known manner), which impact depends on the so-called Euler angles, $\theta = [\theta_x,\ \theta_y,\ \theta_z]$, which represent the rotations that translate between the Inertial reference frame of Earth and the vehicle reference frame. The influence from gravity can be explained by Einstein's equivalence principle, which states that it is not possible to distinguish between a change in speed and influence from gravity. Using only IMUs and wheel speed sensors, it is impossible or at least very difficult to distinguish reliably between changes in road slope and road banking from a change in pitch and roll motion of the vehicle relative the road surface. It is an objective of the present disclosure to solve or at least mitigate these problems.

For motion planning, one typically need motion estimates to be expressed in the ground surface coordinates, i.e., in the ground surface reference frame. For understanding of the dynamics of the vehicle, e.g., vehicle stability, etc., motion estimates are often desired to be expressed relative to the gravity vector, i.e., in the Inertial reference system. Since the motion of the vehicle relative to the ground surface is typically not measured directly by sensors today, it is popular to make assumptions about the physics of the vehicle, and to infer motion of the vehicle relative to the ground surface based on the assumptions. For example, for a known lateral acceleration, there is a certain expected chassis roll motion caused by the suspension deflection on the vehicle. In some applications, vertical suspension travel sensors are used to measure deflection of the suspension, which indicates how much that part of the vehicle body "drops" or "lifts", which then can be used to compute roll or/and pitch angle in the ground surface reference plane. Even here there are some assumptions, e.g., tyre deflection is excluded from consideration.

A purpose of the techniques disclosed herein is to allow concurrent identification of the vehicle motion in two or more reference frames, such as a vehicle reference frame, a ground surface reference frame, and an Earth inertial measurement frame. This allows a motion estimate to be determined which identifies both vehicle motion and road geometry at the same time, such that vehicle pitch and roll motion relative to the road surface can be distinguished from changes in road slope and banking in a reliable manner. A system having access to this type of estimate can thus identify if an output pitch rate from an IMU is due to an actual pitch rate of the vehicle relative to the ground surface, or if the pitch rate measured by the IMU is in fact the result of a change in road slope.

The range information from the radar transceiver or transceivers to the ground surface can be used to determine pitch angle, roll angle, and vehicle heave, since the ranges change with pitch, roll and heave in a known manner.

A vehicle control system having access to this type of refined motion estimate may control the vehicle in a more reliable manner. The vehicle control may comprise, e.g., control of vehicle steering, brakes, propulsion, active suspension systems, and so on.

At least some of the teachings herein are based on the realization that a ground speed radar system, such as that discussed above in connection to Figure 2, measures vehicle motion in the ground surface reference frame, while an IMU mounted on the vehicle provides output data in the vehicle reference frame. A vehicle motion estimation system which comprises an IMU system with one or more IMUs and a ground speed radar system with a plurality of radar transceivers can thus be used to separate the effects on vehicle motion from changes in road geometry from changes in vehicle motion due to motion actuator control and other external forces acting on the vehicle, such as wind.

According to the teachings herein, one or more radar transceivers 180, 190 are configured to measure the vehicle's pitch and roll orientation and their derivatives, and also translational speeds of the vehicle relative the ground surface, i.e., $\dot{\theta}_r$ and $V_r$ relative to the ground surface 101. One or more IMUs comprising accelerometers and gyroscopes are concurrently used to measure angular rates and accelerations in the vehicle reference frame, i.e., $\omega$ and $a$.

A sensor fusion algorithm such as an advanced sensor fusion filter or a more simple structure of reduced complexity can be used to jointly process the measurements from the radar system and the IMU system and output motion state estimates in two different reference frames. Vehicle motion estimates can for instance be output as: A) the vehicle's motion relative the ground surface 101, and B) the orientation of the ground surface 101 (in terms of, e.g., slope and banking) with respect to the Inertial reference frame, possibly along with the respective gradients of the slope and banking as function of travelled distance or time (which then becomes a function of the vehicle speed over ground).

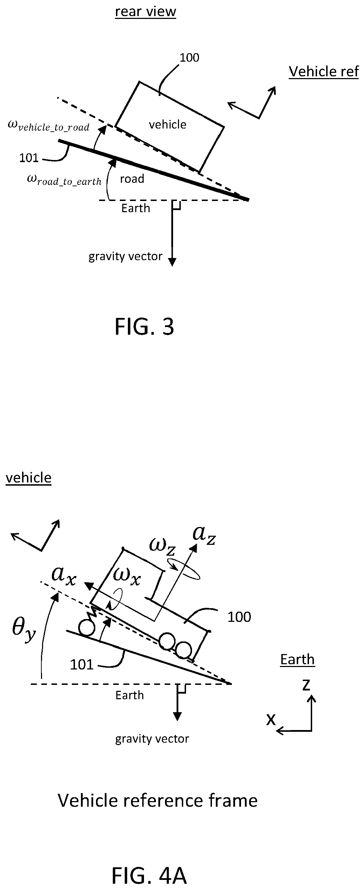

Figure 3 provides an illustrative example of the techniques disclosed herein. A rear view of a vehicle 100 is schematically shown in Figure 3. The road in this case has a non-zero banking angle which is changing as function of travelled distance and the vehicle at the same time has a non-zero roll angle relative to the road, i.e., relative to the ground surface 101, which is changing overtime. The vehicle 100 in Figure 3 thus has a chassis roll-rate $\omega_{x,vehicle\_to\_road}$, which is to be interpreted here as the change (with respect to time) of the vehicle's roll angle relative the ground surface 101. The ground surface 101 at the same time changes it's banking with respect to time (or distance), and this change is here denoted $\omega_{x,road\_to\_earth}$.

Assume that an IMU system and a radar system are both configured to measure roll-rate, denoting the measurements $m_{IMU}$ and $m_{radar}$ respectively. The following relation then exists between roll-rate measurements and vehicle motion states:

$$\begin{bmatrix} m_{IMU} \\ m_{radar} \end{bmatrix} = \begin{bmatrix} 1 & 1 \\ 0 & 1 \end{bmatrix} \cdot \begin{bmatrix} \omega_{x,road\_to\_earth} \\ \omega_{x,vehicle\_to\_road} \end{bmatrix}$$

In other words, the IMU measures the total roll-rate between the vehicle and the gravity vector $g$, while the ground speed radar system only measures the roll-rate between the vehicle and the ground surface 101, regardless of how the road inclination relative to the Earth horizontal plane changes over time or distance. Note that $\omega_{x,road\_to\_earth}$ is a hidden state, which cannot be identified by using only one of the two sensors (IMU and ground radar system). However, taking the inverse of the observation matrix above, we can identify both states:

$$\begin{bmatrix} \omega_{x,road\_to\_earth} \\ \omega_{x,vehicle\_to\_road} \end{bmatrix} = \begin{bmatrix} 1 & -1 \\ 0 & 1 \end{bmatrix} \cdot \begin{bmatrix} y_{IMU} \\ y_{radar} \end{bmatrix}$$

In this simple example, the combination of using IMU and ground speed radar provides the possibility to jointly estimate the roll-rate of the vehicle and the "banking rate" of the road. This example is an example of how the output data from the ground speed radar system and the output data from the IMU system can be jointly processed to obtain an estimate of the motion of the vehicle and at the same time an estimate of the road geometry relative to Inertial reference system. The same straight forward principle can be applied to determine pitch-rate of the vehicle relative to the ground surface and corresponding change in road slope.

Consequently, there is disclosed a control system for controlling motion of a vehicle, where the vehicle comprises a ground speed radar system arranged to measure motion of the vehicle relative to a ground surface supporting the vehicle in a ground surface reference frame, and an IMU system arranged to measure motion of the vehicle in a vehicle reference frame. The control system comprises processing circuitry configured to obtain radar data from the radar system and IMU data from the IMU system, and to determine the vehicle's motion relative the ground surface 101, and the orientation of the ground surface (in terms of, e.g., slope and banking) with respect to the Inertial reference frame, optionally together with the respective gradients of the slope and banking as function of travelled distance or time which then becomes a function of the vehicle speed over ground.

The underlying principles of the simple example in Figure 3 can be extended to cover both roll-rate, pitch-rate, and yaw-rate, as will be explained in more detail in the following. A signal processing architecture such as a filter or data fusion module can be designed to jointly process the data from the IMU or IMUs on a vehicle and the ground speed radar system to identify contributions to motion of the vehicle from the motion actuators on the vehicle and from the ground surface itself.

The design may, e.g., comprise a model of vehicle dynamics describing the kinematics of the vehicle. A state vector includes states of the road and the vehicle in the different reference frames. A state prediction can be done using the model, followed by a measurement update by using measurements from both the radar and the IMU. Finally, the prediction is corrected by the measurement and weighted by model and measurement uncertainty, using techniques known in the art.

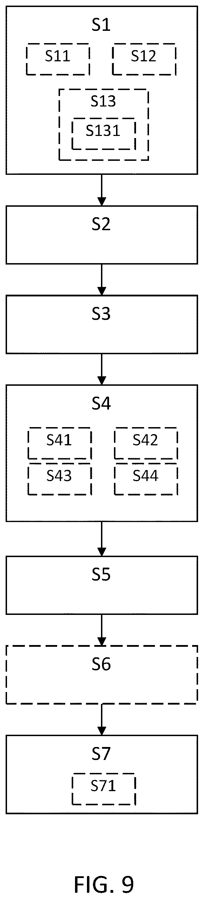

To summarize, with reference to Figure 9, the present disclosure relates to a computer-implemented method for controlling motion of a vehicle 100. The method comprises configuring S1 a ground speed radar system 201-206 arranged to measure motion of the vehicle 100 relative to a ground surface 101 supporting the vehicle 100 in a ground surface reference frame, and an IMU system 210 arranged to measure motion of the vehicle 100 in a vehicle reference frame. Both the ground surface reference frame and the vehicle reference frame was discussed above. The method comprises obtaining S2 radar data from the radar system and IMU data from the IMU system. As noted above, this data is obtained in two different coordinate systems, which is important in order to be able to estimate motion of the vehicle in two different reference frames. The method also comprises determining S3 motion by the vehicle 100 in the ground surface 101 reference frame based on the radar data and determining S4 motion by the vehicle 100 in the vehicle reference frame based on the IMU data. The method also comprises identifying S5 an orientation of the ground surface 101, such as road slope or road banking, relative to Earths horizontal plane, based on joint processing of the radar data and on the IMU data. This allows for a more accurate and also a more reliable control S7 of the motion of the vehicle 100 since this control can now be based at least in part on the orientation of the ground surface 101 relative to gravity.

This simple example in Figure 3 can be generalized to a more complete theory which allows estimation of vehicle motion in a ground surface reference frame and also in relation to the gravity vector, i.e., in an inertial reference frame. The theory here aims to give a more formal description of the coordinate systems, and how to translate between them. With reference to Figures 4A-C, there are three different reference frames or coordinate systems to consider. The motion of the vehicle can be described in any of the three reference frames. Different sensors, depending on the sensor technology, provide sensor output in different reference frames.

**Figure 4A** - **the vehicle reference frame:** The axes in this coordinate system "follows" the vehicle when it is under motion. The x-axis is pointing in the vehicle longitudinal direction, the y-axis points in the lateral direction (to the left when facing forwards), and the z-axis is pointing upwards normal to the wheelbase plane spanned by the x and y axes. Angular rates about the axes are denoted $\omega = [\omega_x\,\omega_y\,\omega_z]^T$ rad/s and accelerations along the axes are denoted $a = [a_x\,a_y\,a_z]^T$ m/s$^2$. The translational speeds are denoted as $v = [v_x\,v_y\,v_z]^T$. In this application an IMU is measuring $\omega$ and $a$. Note that the IMU cannot measure $v$ directly. The IMU can only output an estimate of $v$ given a known initial velocity by using an integration of a time sequence of vehicle accelerations in $a$. The longitudinal acceleration that is output from an IMU mounted on the vehicle 100 provides acceleration data in the vehicle reference frame, but this acceleration data will of course be affected by the gravity vector. Suppose for instance that a vehicle is parked in a downward slope having inclination $\alpha$ in the vehicle longitudinal direction and no banking, i.e., no lateral slope in the vehicle reference frame. The longitudinal acceleration that is output from the vehicle IMU will then be $a_x = g * sin(\alpha)$. If the vehicle then starts to accelerate along the slope, then output from the IMU will change to $a_x = \dot{v}_x + g * sin(\alpha)$, i.e., the sum of the gravity contribution and the change in longitudinal speed in the vehicle reference frame. As shown in Figure 4A, the vehicle reference frame is normally defined to be parallel with the vehicle chassis. The suspension of the vehicle 100 can result in an angle relative to the ground plane 101. In the example of Figure 4A, a pitch angle is present.

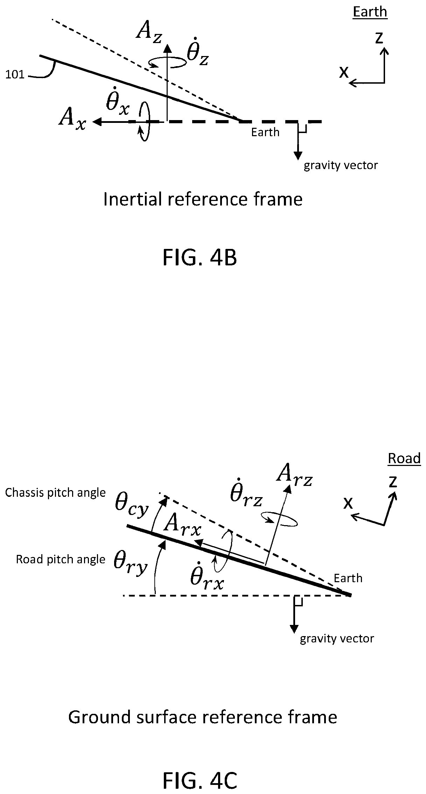

**Figure 4B** - **the Inertial reference frame:** This reference frame is defined based on the gravity vector and the Earth coordinate system, where the xy-plane is parallel to the horizontal plane and where the z-axis is aligned with the gravity vector, i.e., pointing upwards. In most applications the yaw angle in the Inertial reference plane is of little consequence, hence the rotation of the xy-plane in the Inertial reference frame is often taken to be the same as that in the vehicle reference frame. Angular rates in the reference frame are denoted $\dot{\theta} = [\dot{\theta}_x\,\dot{\theta}_y\,\dot{\theta}_z]^T$ rad/s and accelerations $A = [A_x\,A_y\,A_z]^T$ m/s^2 and translational speeds $V = [V_x\,V_y\,V_z]^T$. In this application, *none* of these entities can be measured directly by a sensor arranged on the vehicle 100. Both $A$ and $V$ are projections of motion in the vehicle reference frame onto the Inertial reference frame. In the example with the parked car in the slope above, the acceleration in the Inertial reference frame is $A = [0\ 0\ g]^T$. $\theta = [\theta_x, \theta_y, \theta_z]$ are the Euler angles which represent the rotations that translate between the Inertial reference frame and the vehicle reference frame.

**Figure 4C** - **the ground surface reference frame:** This frame is defined in relation to the ground surface 101, i.e., the xy-plane is in this case parallel to the ground surface 101, or in the case of an uneven ground surface parallel to an approximate extension plane of the ground surface, such as a least-squares fit of a plane to the ground surface. The z-axis is normal to the ground surface 101, i.e., pointing upwards and away from the road surface. Angular rates are here denoted $\dot{\theta}_r = [\dot{\theta}_{rx}\,\dot{\theta}_{ry}\,\dot{\theta}_{rz}]^T$ rad/s, accelerations $\boldsymbol{A}_r = [A_{rx}\,A_{ry}\,A_{rz}]^T$ m/s$^2$ and translational speeds $\boldsymbol{V}_r = [V_{rx}\,V_{ry}\,V_{rz}]^T$. In this application, a system of radars can be configured to measure $\dot{\theta}_r$ and $\boldsymbol{V}_r$, as discussed above in connection to Figure 2 (in practice, measurements need to be projected to the road). $\boldsymbol{A}_r$ cannot be measured directly since the radar system "misses" the effect of gravity. The radar can, however, measure acceleration by the vehicle on the ground surface 101 without accounting for the gravity component in the acceleration.

The orientation of the vehicle relative to the Inertial reference frame is defined by the Euler angles $\theta = [\theta_x\,\theta_y\,\theta_z]^T$. To transform variables from inertial coordinates to vehicle coordinates three rotational operations must be applied via the three matrices. Note that several definitions of Euler angles exist in the literature, depending on in which order the rotations are done, and hence the order of multiplication of the three matrices. Note that the product is non-commutative. The rotation matrix around the x, y and z axis are as follows:

$$\boldsymbol{T}_x = \begin{bmatrix} 1 & 0 & 0 \\ 0 & \cos\theta_x & \sin\theta_x \\ 0 & -\sin\theta_x & \cos\theta_x \end{bmatrix}$$

$$\boldsymbol{T}_y = \begin{bmatrix} \cos\theta_y & 0 & -\sin\theta_y \\ 0 & 1 & 0 \\ \sin\theta_y & 0 & \cos\theta_y \end{bmatrix}$$

$$\boldsymbol{T}_z = \begin{bmatrix} \cos\theta_z & \sin\theta_z & 0 \\ -\sin\theta_z & \cos\theta_z & 0 \\ 0 & 0 & 1 \end{bmatrix}$$

The total transform from the Inertial reference frame to the vehicle reference frame is then

$$\boldsymbol{T} = \boldsymbol{T}_x \boldsymbol{T}_y \boldsymbol{T}_z$$

When angular rates are given in the inertial coordinate system, the angular rates in the vehicle coordinates are found as

$$\begin{bmatrix} \omega_x \\ \omega_y \\ \omega_z \end{bmatrix} = \boldsymbol{T}_x \begin{bmatrix} \dot{\theta}_x \\ 0 \\ 0 \end{bmatrix} + \boldsymbol{T}_x \boldsymbol{T}_y \begin{bmatrix} 0 \\ \dot{\theta}_y \\ 0 \end{bmatrix} + \boldsymbol{T}_x \boldsymbol{T}_y \boldsymbol{T}_z \begin{bmatrix} 0 \\ 0 \\ \dot{\theta}_z \end{bmatrix}$$

The transform from the vehicle reference frame to the Inertial reference frame is

$$\boldsymbol{T}^{-1} = \left(\boldsymbol{T}_x \boldsymbol{T}_y \boldsymbol{T}_z\right)^{-1}$$

Translation of angular rates from vehicle reference frame to Inertial reference frame Angular rates $\omega = [\omega_x\,\omega_y\,\omega_z]^T$ in the vehicle reference frame such as rates measured by the IMU are translated to angular rates $\dot{\theta} = [\dot{\theta}_x\,\dot{\theta}_y\,\dot{\theta}_z]^T$ in the Inertial reference frame as follows:

$$\boldsymbol{\omega} = \begin{bmatrix} \omega_x \\ \omega_y \\ \omega_z \end{bmatrix} = \begin{bmatrix} 1 & 0 & -\sin(\theta_y) \\ 0 & \cos(\theta_x) & \cos(\theta_y)\cdot\sin(\theta_x) \\ 0 & -\sin(\theta_x) & \cos(\theta_y)\cdot\cos(\theta_x) \end{bmatrix} \cdot \begin{bmatrix} \dot{\theta}_x \\ \dot{\theta}_y \\ \dot{\theta}_z \end{bmatrix} = \boldsymbol{R}(\boldsymbol{\theta}) \cdot \dot{\boldsymbol{\theta}} \qquad (1)$$

Where $\theta = [\theta_x\,\theta_y\,\theta_z]^T$ are the Euler angles, which represent tilt angles between the vehicle reference frame and the Inertial reference frame. Equation 1 comes from a particular sequence of three rotations. From (1) it is clear that the rate in one frame to another depends on the Euler angles. Note that, in case $\theta_x = \theta_y = 0$, then the angular rates of the two systems coincide, since cos(0) = 1 and sin(0) = 0:

$$
\begin{bmatrix} \omega_x \\ \omega_y \\ \omega_z \end{bmatrix} = \begin{bmatrix} 1 & 0 & 0 \\ 0 & 1 & 0 \\ 0 & 0 & 1 \end{bmatrix} \cdot \begin{bmatrix} \dot{\theta}_x \\ \dot{\theta}_y \\ \dot{\theta}_z \end{bmatrix} = \begin{bmatrix} \dot{\theta}_x \\ \dot{\theta}_y \\ \dot{\theta}_z \end{bmatrix}.
$$

Assume now that a vehicle is driving downhill along a helical spiral in, e.g., between floors in a large parking garage. We have the following Euler angles and Euler angle derivatives:

| | Euler angles | Euler angles derivatives |
|---|---|---|
| **Roll** | $\theta_x = 0$ | $\dot{\theta}_x = 0$ |
| **Pitch** | $\theta_y = +0.1$ *rad* | $\dot{\theta}_y = 0$ |
| **Yaw** | $\theta_z$ (constantly growing) | $\dot{\theta}_z = +0.3\dfrac{revolution}{s} = 1.9\,rad/s$ |

In this case $\theta_y$ is the (Euler) pitch angle between the vehicle reference frame and the Inertial reference frame. If we assume no chassis pitch angle, then $\theta_y$ represents the pitch angle between the road surface and the Earth horizontal plane, i.e., ground surface pitch angle. With the dimension of the spiral in mind, combined with a certain vehicle speed, a Euler yaw angle rate $\dot{\theta}_z$ in the inertial frame will be present. According to (1):

$$
\begin{bmatrix} \omega_x \\ \omega_y \\ \omega_z \end{bmatrix} = \begin{bmatrix} 1 & 0 & -\sin(\theta_y) \\ 0 & \cos(0) & \cos(\theta_y) \cdot \sin(0) \\ 0 & -\sin(\theta_x) & \cos(\theta_y) \cdot \cos(0) \end{bmatrix} \cdot \begin{bmatrix} 0 \\ 0 \\ \dot{\theta}_z \end{bmatrix} = \begin{bmatrix} -\sin(\theta_y) \cdot \dot{\theta}_z \\ 0 \\ \cos(\theta_y) \cdot \dot{\theta}_z \end{bmatrix} \tag{2}
$$

$$
= \begin{bmatrix} -\sin(0.1) \cdot 1.9 \\ 0 \\ \cos(0.1) \cdot 1.9 \end{bmatrix} = \begin{bmatrix} -0.19\,rad/s \\ 0\,rad/s \\ 1.89\,rad/s \end{bmatrix}
$$

From (2) it is evident that the roll-rate sensor measures a non-zero roll-rate $\omega_x$ even though the vehicle has a constant roll angle, which may seem counterintuitive.

From (1) the inverse is formulated as:

$$
\dot{\boldsymbol{\theta}} = \boldsymbol{R}^{-1}(\boldsymbol{\theta}) \cdot \boldsymbol{\omega} \rightarrow \begin{bmatrix} \dot{\theta}_x \\ \dot{\theta}_y \\ \dot{\theta}_z \end{bmatrix} = \begin{bmatrix} 1 & \sin(\theta_x) \cdot \tan(\theta_y) & \cos(\theta_x) \cdot \tan(\theta_y) \\ 0 & \cos(\theta_x) & -\sin(\theta_x) \\ 0 & \sin(\theta_x)/\cos(\theta_y) & \cos(\theta_x)/\cos(\theta_y) \end{bmatrix} \cdot \begin{bmatrix} \omega_x \\ \omega_y \\ \omega_z \end{bmatrix} \tag{3}
$$

If $\omega$ is measured by an IMU, then (3) can be used together with integration:

$$
\boldsymbol{\theta}(t) = \int_0^t \dot{\boldsymbol{\theta}}\, d\tau + \boldsymbol{\theta}_0 \tag{4}
$$

Where $\theta_0$ is the initial condition of the Euler angles. In practice, the integration will suffer from drift, so the key is to also use accelerometer data from the IMU as another way to estimate the Euler angles.

The acceleration by the vehicle in the vehicle reference frame, corresponding to the output of the accelerometers in the IMU, has the following relation with speeds and gravity:

$$\boldsymbol{a} = \begin{bmatrix} a_x \\ a_y \\ a_z \end{bmatrix} = \begin{bmatrix} \dot{v}_x \\ \dot{v}_y \\ \dot{v}_z \end{bmatrix} + \begin{bmatrix} \omega_y v_z - \omega_z v_y \\ \omega_z v_x - \omega_x v_z \\ \omega_x v_y - \omega_y v_x \end{bmatrix} + g \cdot \begin{bmatrix} -\sin(\theta_y) \\ \sin(\theta_x)\cos(\theta_y) \\ \cos(\theta_x)\cos(\theta_y) \end{bmatrix} \tag{5}$$

The interpretation of (5) is that a measured acceleration is a summation of a change in speed over time in the vehicle reference frame, a centripetal acceleration, and gravity. Note the importance of the Euler angles $\theta = [\theta_x \theta_y \theta_z]^T$ in (5).

It is also noted that equation (5) or similar models of the IMU output can be used to determine the current Euler angles of a vehicle 100 and/or of the ground surface 101. In equation (5), $v_x$, $v_y$, $v_z$, $\dot{v}_x$, $\dot{v}_y$, $\dot{v}_z$ can be obtained from the ground speed radar system and $\omega_x$, $\omega_y$, $\omega_z$ can be obtained from the ground speed radar system and/or from the IMU system. This means that the only remaining unknown in equation (5) are the Euler angles $\theta_x$, $\theta_y$, $\theta_z$. Hence, it is possible to determine the vector Euler angle $\theta = [\theta_x, \theta_y, \theta_z]$ from the radar data in combination with the IMU data.

Both the Inertial reference frame and the ground surface reference frame are non-moving coordinate systems and the translation between them is just done by multiplying by a rotation matrix, where $\theta_r$ is the Euler angles between the Inertial reference frame and the ground surface reference frame. The translation between the Inertial reference frame and the ground surface reference frame can be determined using range data from the radar system, i.e., the distances from the radar transceivers to the illuminated regions on the ground surface, which change with pitch angle, roll angle, and heave (vertical offset between vehicle and road surface). Specifically, $\theta_x$ is the road or surface bank angle and $\theta_y$ is the road or surface slope angle relative to the Earth horizontal plane.

$$\dot{\boldsymbol{\theta}}_r = \begin{bmatrix} \dot{\theta}_{rx} \\ \dot{\theta}_{ry} \\ \dot{\theta}_{rz} \end{bmatrix} = \begin{bmatrix} \cos(\theta_{ry}) & 0 & -\sin(\theta_{ry}) \\ \sin(\theta_{rx}) \cdot \sin(\theta_{ry}) & \cos(\theta_{rx}) & \sin(\theta_{rx}) \cdot \cos(\theta_{ry}) \\ \cos(\theta_{rx}) \cdot \sin(\theta_{ry}) & -\sin(\theta_{rx}) & \sin(\theta_{rx}) \cdot \cos(\theta_{ry}) \end{bmatrix} \cdot \begin{bmatrix} \dot{\theta}_x \\ \dot{\theta}_y \\ \dot{\theta}_z \end{bmatrix} \tag{6}$$

$$= \boldsymbol{B}(\boldsymbol{\theta}_r) \cdot \dot{\boldsymbol{\theta}}$$

The same transformation is used for speeds and accelerations.

$$\boldsymbol{v}_r = \boldsymbol{B}(\boldsymbol{\theta}_r) \cdot \boldsymbol{V} \tag{7a}$$

$$\boldsymbol{a}_r = \boldsymbol{B}(\boldsymbol{\theta}_r) \cdot \boldsymbol{A} \tag{7b}$$

Filter design for joint processing of radar data and IMU data

The filter design relies on selecting states, prediction model and measurement model. There are many options on how to select these. We will outline the principle of a complete filter:

States:

$\theta, \dot{\theta}, \boldsymbol{A}, \boldsymbol{V}$ (inertial states, angles and their derivatives between vehicle and earth, acceleration, and speed in the inertial frame)

$\theta_r, \dot{\theta}_r, \boldsymbol{A}_r, \boldsymbol{V}_r$ (ground surface states, angles and their derivatives between vehicle and road, acceleration, and speed in road frame)

$\omega, \boldsymbol{v}, \boldsymbol{a}$ (vehicle states, angular speed, translational speed, and translational acceleration in the vehicle-fixed frame)

Measurements:

$\omega, \boldsymbol{a}$ (IMU, angular speed, and translational acceleration in the vehicle-fixed frame)

$\theta_r, \dot{\theta}_r, A_r, V_r$ (radar system, angles and their derivatives between vehicle and road, acceleration and speed given in the ground surface reference frame).

Sensor configuration:

The IMU should preferably be a 6 degrees of freedom (DoF) IMU mounted somewhere at or inside the vehicle body. The radar system should be configured in a way such that it can measure 6 degree of freedom using both speed and range, i.e., roll angle, pitch angle, and yaw angle and also their time derivatives, longitudinal, lateral, and vertical distance, and speed between vehicle body and road. At least 6 single lobe radars can be used for this purpose, where each radar measures radial range and speed relative to the ground surface. Antenna arrays can be used to reduce the number of radar transceivers.

As mentioned above one or more radar transceivers 180 may comprise more advanced antenna arrays 500, 600 as illustrated in Figure 5 and in Figure 6. An antenna array is a device comprising a plurality of antenna elements. Each pair of transmit antenna and receive antenna in the array gives rise to a respective range-Doppler map, indicating received radar signal energy at different distances and radial velocities. Each range-Doppler map cell is a complex value associated with a phase and a magnitude, in a known manner. A complex-valued vector of signal values corresponding to a given range and Doppler can be obtained by extracting corresponding values from the R-D map of each antenna pair. The array may comprise multiple antenna elements that are spaced uniformly such as on the order of a half-lambda. Alternatively, they may be spaced more than half lambda. Some previously known radar systems use multiple transmission antennas either sequentially or simultaneously in time to create a virtual aperture sometimes referred to as a Synthetic Aperture Radar (SAR), that is larger than the physical array. The net effect is a relatively small number of real or virtual antenna elements and a relatively small physical aperture. The angle of arrival of an incoming radar reflection can be determined conveniently by a third FFT - the angle FFT, applied to range-Doppler cells from each range-Doppler map generated by each transmit-antenna pair in the radar sensor array, after appropriate zero-padding. The determination of target angle using an FFT may for instance be realized using the Bartlett algorithm. The Bartlett algorithm is generally known and will therefore not be discussed in more detail herein. In case the antenna element spacing is non-uniform, a zero-padding of the complex-valued vector may be needed prior to the FFT operation.

The antenna array 500, 600 can be configured to emit the radar signal 220 in a transmission lobe simultaneously covering a field of view (FoV) comprising a range of azimuth and/or elevation directions, as illustrated by the example 500 in Figure 5, or in one or more transmission lobes that are narrower than the FoV, as illustrated by the example 600 in Figure 6. The narrow transmission lobe in Figure 6 can also be swept over the range as illustrated by transmission lobe 610a (illustrated by solid line) or emitted as a plurality of separate narrow beams 610b, 610c, 610d (illustrated by dash-dotted lines) which at least partly covers the FoV, i.e., the range of azimuth directions covered by the radar transceiver. The separate narrow beams 610b, 610c, 610d may be partly overlapping, or separated from each other. There may also be gaps in-between the narrow beams 610b, 610c, 610d as in the example 600.

An antenna array can also be configured to emit the radar signal 220 in a transmission lobe that covers a range of different elevation directions. The radar transceiver can then apply array processing of the received radar signal to also detect radar signal energy incoming from different elevation directions. This is an advantage since more distinct radar signal components may be detected by considering different elevation angles separately. The elevation angle of transmission and/or reception of radar signal energy can also be optimized by varying the elevation angle of the transmission and/or of the reception, e.g., to maximize received radar signal power. Some road surfaces are less prone to reflecting radar signal energy compared to other road surfaces. A rough road surface generally reflects radar signal energy batter than a very smooth road surface, such as a road surface with standing water. The better the road surface reflects radar signal energy, the less steep the elevation angle can be. I.e., in case the road surface reflects radar signal energy poorly the angle can be decreased, directing the radar signal more directly towards the road surface, and vice versa.

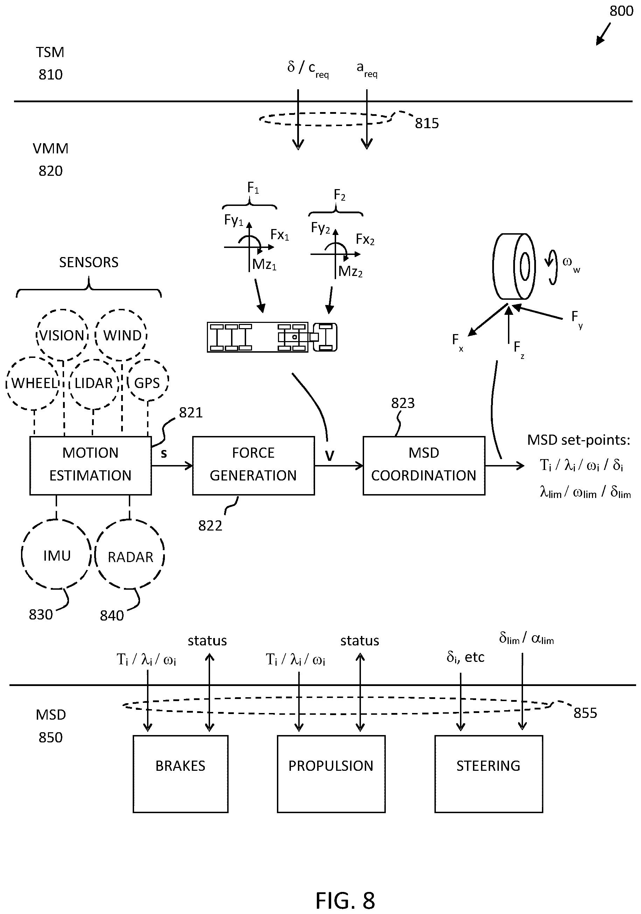

Figure 8 shows an example vehicle 700 that comprises a plurality of radar transceivers, among which two comprise more advanced antenna arrangements, i.e., antenna arrays which can measure radial velocities and distances to the ground in several different directions simultaneously or sequentially. This motion estimation system can be used to determine motion of the articulated vehicle at several different places on the vehicle, as illustrated in Figure 7. The centers of gravity 710, 720 of the two vehicle units are indicated in Figure 7. The IMU system on the vehicle 700 comprises three IMU sensors 210a, 210b, 210c.

Figure 8 illustrates an example vehicle control function architecture applicable with the herein disclosed methods, control units and sensor systems. A traffic situation management (TSM) function 810 plans driving operations of the vehicle 100 with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles $a_{req}$ and curvature profiles $c_{req}$ which describe a desired target vehicle velocity in the vehicle forward direction and turning to be maintained for a given maneuver. Steering angles $\delta$ may also be comprised in the output 815 from the TSM function 810. The TSM function continuously requests the desired acceleration profiles $a_{req}$ and steering angles (or curvature profiles $c_{req}$) from a vehicle motion management (VMM) function 820 which performs force allocation to meet the requests from the TSM function in a safe and robust manner. The VMM function 820 operates on a timescale of below one second or so and will be discussed in more detail below.

The VMM function 820 continuously transforms the acceleration profiles $a_{req}$ and curvature profiles $c_{req}$ from the TSM function into control commands for controlling vehicle motion functions, actuated by the different motion support devices (MSDs) of the vehicle 100 which report back capabilities to the VMM, which in turn are used as constraints in the vehicle control. The MSDs are generally controlled by an MSD control function 850, and the MSDs may comprise actuators such as brakes, propulsion devices, and steering. The VMM function 820 performs vehicle state or motion estimation 821 according to the teachings herein, based primarily on IMU data 830 and ground speed radar data 840. However, other sensor signals may also be used in the motion estimation 821 performed by the VMM function 820.

The VMM function 360 continuously determines a vehicle state s comprising positions, speeds, accelerations, and potentially also articulation angles of the different units in the vehicle combination by the techniques discussed herein.

The result of the motion estimation 821, i.e., the estimated vehicle state s, is input to a force generation module 822 which determines the required global forces $\mathbf{F}=[F_1, F_2]$ for the different vehicle units to cause the vehicle 100 to move according to the requested acceleration and curvature profiles $a_{req}$, $c_{req}$, and to behave according to the desired vehicle behavior. The required global force vector $\mathbf{F}$ is input to an MSD coordination function 823 which allocates wheel forces and coordinates other MSDs such as steering and suspension. The MSD coordination function outputs an MSD control allocation for the i:th wheel, which may comprise any of a torque $T_i$, a target longitudinal wheel slip $\lambda_i$, a wheel rotational speed $\omega_i$, and/or a wheel steering angle $\delta_i$. The coordinated MSDs then together provide the desired lateral Fy and longitudinal Fx forces on the vehicle units, as well as the required moments Mz, to obtain the desired motion by the vehicle combination 100.

Thus, according to some aspects of the present disclosure, the VMM function 820 manages both force generation and MSD coordination, i.e., it determines what forces that are required at the vehicle units in order to fulfil the requests from the TSM function 810, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 810.

The architecture illustrated in Figure 8 is an example of how the vehicle motion estimation techniques can be used to control motion of the vehicle 100 based on the motion estimation techniques disclosed herein.

Figure 9 is a flow chart which illustrates methods that summarize the teachings herein. There is illustrated a computer-implemented method for controlling motion of a vehicle 100, 700. The method comprises configuring S1 a ground speed radar system 201-206 arranged to measure motion of the vehicle 100, 700 relative to a ground surface 101 supporting the vehicle 100, 700 in a ground surface reference frame, and an IMU system 210 arranged to measure motion of the vehicle 100, 700 in a vehicle reference frame. The ground surface reference frame and the vehicle reference frames were exemplified above. It is noted, however, that several different definitions of the reference frames are possible within the scope of the present disclosure. The vehicle reference frame generally relates to a reference frame which follows the vehicle as it moves over the ground surface, while the ground surface reference frame is tightly connected to the ground surface and defined based on the geometry of the ground surface.

The method comprises obtaining S2 radar data $\dot{\theta}_r$, $\mathbf{V}_r$ from the radar system and IMU data $\omega$, $a$ from the IMU system. The radar data is obtained from a ground speed radar system and may, generally, comprise ground speeds in several directions from the vehicle, and also distances to ground from several locations on the vehicle. The IMU data is obtained from one or more IMUs located on the vehicle. The IMUs may be located at different positions on the vehicle, where it is understood that the position on the vehicle of the different IMUs needs to be accounted for when processing the output data from the IMU.

The method also comprises determining S3 motion by the vehicle 100, 700 in the ground surface 101 reference frame based on the radar data $\dot{\theta}_r$, $\mathbf{V}_r$, and determining S4 motion by the vehicle 100, 700 in the vehicle reference frame based on the IMU data $\omega, a$. Thus, vehicle motion in two different reference frames are determined using the two different types of input data. As discussed above, this diversity in the obtained data not only allows for determining vehicle motion on different reference systems but it also allows for identifying the contribution of the ground surface geometry to the overall motion of the vehicle relative to, e.g., the Inertial reference system defined by the gravity vector $g$. Thus, the method comprises identifying S5 an orientation of the ground surface 101 relative to a horizontal plane, based on joint processing of the radar data $\dot{\theta}_r$, $\mathbf{V}_r$ and on the IMU data $\omega, a$, and controlling S7 the motion of the vehicle 100, 700 based at least in part on the orientation of the ground surface 101 relative to gravity $g$. The control of the vehicle can be done in many different ways, as will be appreciated by the person skilled in the art. Road slope can, for instance, be accounted for when controlling propulsion devices and or brakes on the vehicle to obtain a desired motion by the vehicle.

The method optionally comprises identifying S6 an orientation change rate of the ground surface 101 with respect to a driven distance, based on joint processing of the radar data $\dot{\theta}_r$, $V_r$ and the IMU data $\omega$, $\boldsymbol{a}$. This is an advantage since now the effects on angular rates of the vehicle motion incurred by changes in ground surface can be identified and accounted for in the vehicle control. Thus, according to some aspects, method also comprises controlling S71 the motion of the vehicle 100, 700 based at least in part on the orientation change rate of the ground surface 101 relative to gravity $g$.

As discussed above in connection to Figure 2, 5 and 6, the method may comprise configuring S11 the ground speed radar system 201-206 with a plurality of radar transceivers 201-206 arranged directed at the ground surface 101, and also configuring S12 at least one radar transceiver with a respective and co-located IMU. It may be an advantage that some IMUs are co-located with a radar transceiver since this simplifies the translation between different reference frames. It may also be an advantage to integrate the IMU hardware together with the radar hardware into a single radar-IMU module which can be mounted on the vehicle and supplied by the same power interface and the same data communication interface.

The method may also comprise configuring S13 at least one radar transceiver of the ground speed radar system 201-206 with an antenna array 500, 600, as discussed above in connection to, e.g., Figure 5 and Figure 6. An advantage of using an antenna array to collect the radar data is that the antenna array allows for measuring radial velocities and also distances in more than one direction simultaneously or sequentially. The method preferably also comprises configuring S131 the at least one radar transceiver having an antenna array 500, 600 with a respective and co-located IMU. The combination of a radar transceiver with an antenna array and an IMU provides for a powerful motion estimation sensor capable of estimating vehicle motion on two or more reference systems at the same time, which is an advantage.

Some aspects of the methods disclosed herein comprise determining S41 motion by the vehicle 100, 700 in the vehicle reference frame based on joint processing of the radar data $\dot{\theta}_r$, $V_r$ and the IMU data $\omega$,$\boldsymbol{a}$, and/or determining S42 motion by the vehicle 100, 700 in an Inertial reference frame based on joint processing of the radar data $\dot{\theta}_r$, $V_r$ and the IMU data $\omega$,$\boldsymbol{a}$, and/or determining S43 motion by the vehicle 100, 700 in the ground surface reference frame based on joint processing of the radar data $\dot{\theta}_r$, $V_r$ and the IMU data $\omega$,$\boldsymbol{a}$.

The method may also comprise determining S44 motion by the vehicle 100, 700 based on joint processing of the radar data $\dot{\theta}_r$, $V_r$ and the IMU data $\omega$,$\boldsymbol{a}$, and on a model of vehicle dynamics associated with the vehicle 100, 700. The joint processing of the radar data $\dot{\theta}_r$, $V_r$ and the IMU data $\omega$,$\boldsymbol{a}$ optionally comprises processing by a Kalman filter, an extended Kalman filter, or a Particle filter, just to give a few examples.

There is also disclosed herein control system 160, 170, 800 for controlling motion of a vehicle 100, 700, where the vehicle 100, 700 comprises a ground speed radar system 201-206 arranged to measure motion of the vehicle 100, 700 relative to a ground surface 101 supporting the vehicle 100, 700 in a ground surface reference frame, and an inertial measurement unit, IMU, system 210 arranged to measure motion of the vehicle 100, 700 in a vehicle reference frame, the control system 160, 170, 800 comprising processing circuitry 1002 configured to:

obtain S2 radar data $\dot{\theta}_r$, $V_r$ from the radar system and IMU data $\omega$,$\boldsymbol{a}$ from the IMU system,

determine S3 motion by the vehicle 100, 700 in the ground surface 101 reference frame based on the radar data $\dot{\theta}_r$, $V_r$

determine S4 motion by the vehicle 100, 700 in the vehicle reference frame based on the IMU data $\omega$,$\boldsymbol{a}$,

identify S5 an orientation of the ground surface 101 relative to a horizontal plane, based on joint processing of the radar data $\dot{\theta}_r$, $V_r$ and on the IMU data $\omega$,$\boldsymbol{a}$, and

control S7 the motion of the vehicle 100, 700 based at least in part on the orientation of the ground surface 101 relative to gravity $g$.

Figure 10 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures, and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  A computer-implemented method for controlling motion of a vehicle (100, 700), the method comprising

    configuring (S1) a ground speed radar system (201-206, 500, 600) arranged to measure motion of the vehicle (100, 700) relative to a ground surface (101) supporting the vehicle (100, 700) in a ground surface reference frame, and an inertial measurement unit, IMU, system (210) arranged to measure motion of the vehicle (100, 700) in a vehicle reference frame,
    obtaining (S2) radar data ($\dot{\theta}_r, V_r$) from the radar system and IMU data ($\omega, a$) from the IMU system,
    determining (S3) motion by the vehicle (100, 700) in the ground surface (101) reference frame based on the radar data ($\dot{\theta}_r, V_r$),
    determining (S4) motion by the vehicle (100, 700) in the vehicle reference frame based on the IMU data ($\omega, a$),
    identifying (S5) an orientation of the ground surface (101) relative to a horizontal plane, based on joint processing of the radar data ($\theta_r, V_r$) and on the IMU data ($\omega, a$), and
    controlling (S7) the motion of the vehicle (100, 700) based at least in part on the orientation of the ground surface (101) relative to gravity (g).

2.  The computer-implemented method according to claim 1, further comprising identifying (S6) an orientation change rate of the ground surface (101) with respect to a driven distance, based on joint processing of the radar data ($\dot{\theta}_r, V_r$) and the IMU data ($\omega, a$).

3.  The computer-implemented method according to claim 2, comprising controlling (S71) the motion of the vehicle (100, 700) based at least in part on the orientation change rate of the ground surface (101) relative to gravity (g).

4.  The computer-implemented method according to any previous claim, comprising configuring (S11) the ground speed radar system (201-206) with a plurality of radar transceivers (201-206) arranged directed at the ground surface (101).

5. The computer-implemented method according to any previous claim, comprising configuring (S12) at least one radar transceiver with a respective and co-located IMU.

6. The computer-implemented method according to any previous claim, comprising configuring (S13) at least one radar transceiver of the ground speed radar system (201-206, 500, 600) with an antenna array (500, 600).

7. The computer-implemented method according to claim 6, comprising configuring (S131) the at least one radar transceiver having an antenna array (500, 600) with a respective and co-located IMU.

8. The computer-implemented method according to any previous claim, comprising determining (S41) motion by the vehicle (100, 700) in the vehicle reference frame based on joint processing of the radar data ($\dot{\theta}_r, V_r$) and the IMU data ($\omega, a$).

9. The computer-implemented method according to any previous claim, comprising determining (S42) motion by the vehicle (100, 700) in an Inertial reference frame based on joint processing of the radar data ($\dot{\theta}_r, V_r$) and the IMU data ($\omega, a$).

10. The computer-implemented method according to any previous claim, comprising determining (S43) motion by the vehicle (100, 700) in the ground surface reference frame based on joint processing of the radar data ($\dot{\theta}_r, V_r$) and the IMU data ($\omega, a$).

11. The computer-implemented method according to any previous claim, comprising determining (S44) motion by the vehicle (100, 700) based on joint processing of the radar data ($\dot{\theta}_r, V_r$) and the IMU data ($\omega, a$), and on a model of vehicle dynamics associated with the vehicle (100, 700).

12. The computer-implemented method according to claim 11, where the joint processing of the radar data ($\dot{\theta}_r, V_r$) and the IMU data ($\omega, a$) comprises processing by a Kalman filter, an extended Kalman filter, or a Particle filter.

13. A computer program product comprising program code for performing, when executed by processing circuitry, the method of any of claims 1-12.

14. A non-transitory computer-readable storage medium comprising instructions, which when executed by processing circuitry, cause the processing circuitry to perform the method of any of claims 1-12.

15. A control system (160, 170, 800) for controlling motion of a vehicle (100, 700), where the vehicle (100, 700) comprises a ground speed radar system (201-206, 500, 600) arranged to measure motion of the vehicle (100, 700) relative to the ground surface (101) supporting the vehicle (100, 700) in a ground surface reference frame, and an inertial measurement unit, IMU, system (210) arranged to measure motion of the vehicle (100, 700) in a vehicle reference frame, the control system (160, 170, 800) comprising processing circuitry (1002) configured to:

   obtain (S2) radar data ($\dot{\theta}_r, V_r$) from the radar system and IMU data ($\omega, a$) from the IMU system,
   determine (S3) motion by the vehicle (100, 700) in the ground surface (101) reference frame based on the radar data ($\dot{\theta}_r, V_r$),
   determine (S4) motion by the vehicle (100, 700) in the vehicle reference frame based on the IMU data ($\omega, a$),
   identify (S5) an orientation of the ground surface (101) relative to a horizontal plane, based on joint processing of the radar data ($\dot{\theta}_r, V_r$) and on the IMU data ($\omega, a$), and
   control (S7) the motion of the vehicle (100, 700) based at least in part on the orientation of the ground surface (101) relative to gravity (g).

16. A computer-implemented method for estimating an orientation of a ground surface (101) and/or a vehicle (100) supported thereon relative to a horizontal plane, the method comprising

   configuring (S1) a ground speed radar system (201-206, 500, 600) arranged to measure motion of the vehicle (100, 700) relative to a ground surface (101) supporting the vehicle (100, 700) in a ground surface reference frame, and an inertial measurement unit, IMU, system (210) arranged to measure motion of the vehicle (100, 700) in a vehicle reference frame,

obtaining (S2) radar data ($\dot{\theta}_r$, $V_r$) from the radar system and IMU data ($\omega$, $a$) from the IMU system,
determining (S3) motion by the vehicle (100, 700) in the ground surface (101) reference frame based on the radar data ($\dot{\theta}_r$, $V_r$),
determining (S4) motion by the vehicle (100, 700) in the vehicle reference frame based on the IMU data ($\omega$, $a$), and
identifying (S5) an orientation of the ground surface (101) and/or the vehicle (100) relative to the horizontal plane, based on joint processing of the radar data ($\dot{\theta}_r$, $V_r$) and on the IMU data ($\omega$, $a$).

**Amended claims in accordance with Rule 137(2) EPC.**

1. A computer-implemented method for controlling motion of a vehicle (100, 700), the method comprising

   configuring (S1) a ground speed radar system (201-206, 500, 600) arranged to measure motion of the vehicle (100, 700) relative to a ground surface (101) supporting the vehicle (100, 700) in a ground surface reference frame, and an inertial measurement unit, IMU, system (210) arranged to measure motion of the vehicle (100, 700) in a vehicle reference frame,
   obtaining (S2) radar data ($\dot{\theta}_r$, $V_r$) from the radar system and IMU data ($\omega$, $a$) from the IMU system, wherein the IMU data reflects a combined effect of gravity and change of speed,
   determining (S3) motion by the vehicle (100, 700) in the ground surface (101) reference frame based on the radar data ($\dot{\theta}_r$, $V_r$),
   determining (S4) motion by the vehicle (100, 700) in the vehicle reference frame based on the IMU data ($\omega$, $a$),
   identifying (S5) an orientation of the ground surface (101) relative to a horizontal plane, based on joint processing of the radar data ($\dot{\theta}_r$, $V_r$) and on the IMU data ($\omega$, $a$) by identifying an effect in the IMU data of change of speed relative to the ground surface based on the radar data, and removing the identified effect of change of speed relative to the ground surface from the IMU data to identify the orientation of the ground surface relative to the horizontal plane, and controlling (S7) the motion of the vehicle (100, 700) based at least in part on the orientation of the ground surface (101) relative to gravity ($g$).

2. The computer-implemented method according to claim 1, further comprising identifying (S6) an orientation change rate of the ground surface (101) with respect to a driven distance, based on joint processing of the radar data ($\dot{\theta}_r$, $V_r$) and the IMU data ($\omega$, $a$).

3. The computer-implemented method according to claim 2, comprising controlling (S71) the motion of the vehicle (100, 700) based at least in part on the orientation change rate of the ground surface (101) relative to gravity ($g$).

4. The computer-implemented method according to any previous claim, comprising determining (S41) motion by the vehicle (100, 700) in the vehicle reference frame based on joint processing of the radar data ($\dot{\theta}_r$, $V_r$) and the IMU data ($\omega$, $a$).

5. The computer-implemented method according to any previous claim, comprising determining (S42) motion by the vehicle (100, 700) in an Inertial reference frame based on joint processing of the radar data ($\dot{\theta}_r$, $V_r$) and the IMU data ($\omega$, $a$).

6. The computer-implemented method according to any previous claim, comprising determining (S43) motion by the vehicle (100, 700) in the ground surface reference frame based on joint processing of the radar data ($\dot{\theta}_r$, $V_r$) and the IMU data ($\omega$, $a$).

7. The computer-implemented method according to any previous claim, comprising determining (S44) motion by the vehicle (100, 700) based on joint processing of the radar data ($\dot{\theta}_r$, $V_r$) and the IMU data ($\omega$, $a$), and on a model of vehicle dynamics associated with the vehicle (100, 700).

8. The computer-implemented method according to claim 7, where the joint processing of the radar data ($\dot{\theta}_r$, $V_r$) and the IMU data ($\omega$, $a$) comprises processing by a Kalman filter, an extended Kalman filter, or a Particle filter.

9. A computer program product comprising program code for causing, when executed by processing circuitry, performance of the method of any of claims 1-8.

10. A non-transitory computer-readable storage medium comprising instructions, which when executed by processing circuitry, cause the processing circuitry to perform the method of any of claims 1-8.

11. A control system (160, 170, 800) for controlling motion of a vehicle (100, 700), where the vehicle (100, 700) comprises a ground speed radar system (201-206, 500, 600) arranged to measure motion of the vehicle (100, 700) relative to the ground surface (101) supporting the vehicle (100, 700) in a ground surface reference frame, and an inertial measurement unit, IMU, system (210) arranged to measure motion of the vehicle (100, 700) in a vehicle reference frame, the control system (160, 170, 800) comprising processing circuitry (1002) configured to:

obtain (S2) radar data ($\dot{\theta}_r, V_r$) from the radar system and IMU data ($\omega, a$) from the IMU system,
wherein the IMU data reflects a combined effect of gravity and change of speed,
determine (S3) motion by the vehicle (100, 700) in the ground surface (101) reference frame based on the radar data ($\dot{\theta}_r, V_r$),
determine (S4) motion by the vehicle (100, 700) in the vehicle reference frame based on the IMU data ($\omega, a$),
identify (S5) an orientation of the ground surface (101) relative to a horizontal plane, based on joint processing of the radar data ($\dot{\theta}_r, V_r$) and on the IMU data ($\omega, a$) by identifying an effect in the IMU data of change of speed relative to the ground surface based on the radar data, and
removing the identified effect of change of speed relative to the ground surface from the IMU data to identify the orientation of the ground surface relative to the horizontal plane, and
control (S7) the motion of the vehicle (100, 700) based at least in part on the orientation of the ground surface (101) relative to gravity ($g$).

12. The control system according to claim 11, wherein the ground speed radar system (201-206, 500, 600) is configured with a plurality of radar transceivers (201-206) arranged directed at the ground surface (101).

13. The control system according to any of claims 11-12, wherein at least one radar transceiver of the ground speed radar system (201-206, 500, 600) is configured with a respective and co-located IMU.

14. The control system according to any of claims 11-13, wherein at least one radar transceiver of the ground speed radar system (201-206, 500, 600) with an antenna array (500, 600).

15. The control system according to claim 14, wherein the at least one radar transceiver having an antenna array (500, 600) is configured with a respective and co-located IMU.

16. A computer-implemented method for estimating an orientation of a ground surface (101) and/or a vehicle (100) supported thereon relative to a horizontal plane, the method comprising

configuring (S1) a ground speed radar system (201-206, 500, 600) arranged to measure motion of the vehicle (100, 700) relative to a ground surface (101) supporting the vehicle (100, 700) in a ground surface reference frame, and an inertial measurement unit, IMU, system (210) arranged to measure motion of the vehicle (100, 700) in a vehicle reference frame,
obtaining (S2) radar data ($\dot{\theta}_r, V_r$) from the radar system and IMU data ($\omega, a$) from the IMU system, wherein the IMU data reflects a combined effect of gravity and change of speed,
determining (S3) motion by the vehicle (100, 700) in the ground surface (101) reference frame based on the radar data ($\dot{\theta}_r, V_r$),
determining (S4) motion by the vehicle (100, 700) in the vehicle reference frame based on the IMU data ($\omega, a$), and
identifying (S5) an orientation of the ground surface (101) and/or the vehicle (100) relative to the horizontal plane, based on joint processing of the radar data ($\dot{\theta}_r, V_r$) and on the IMU data ($\omega, a$) by identifying an effect in the IMU data of change of speed relative to the ground surface based on the radar data, and removing the identified effect of change of speed relative to the ground surface from the IMU data to identify the orientation of the ground surface relative to the horizontal plane.

FIG. 1

FIG. 2

rear view

FIG. 3

vehicle

Vehicle reference frame

FIG. 4A

Inertial reference frame

FIG. 4B

Ground surface reference frame

FIG. 4C

$A_{rx}$

$A_{ry}$

500

FoV

d1  220  d2

180

**FIG. 5**

$A_{rx}$

$A_{ry}$

600

FoV

610b

610c

610a

610d

180

**FIG. 6**

Antenna array radar transceiver

Single lobe antenna radar transceiver

700

$V_{rz3l}$  $V_{ry3l}$

$\dot{\theta}_{rz3l}$  $\dot{\theta}_{ry3l}$

$V_{rx3l}$

$\dot{\theta}_{rx3l}$

$V_{rz2l}$  $V_{ry2l}$

$\dot{\theta}_{rz2l}$  $\dot{\theta}_{ry2l}$

$V_{rx2l}$

$\dot{\theta}_{rx2l}$

$V_{rz1l}$  $V_{ry1l}$

$\dot{\theta}_{rz1l}$  $\dot{\theta}_{ry1l}$

$V_{rx1l}$

$\dot{\theta}_{rx1l}$

140

110

720

170

210a

130

160

210b

210c

710

$V_{rz3r}$  $V_{ry3r}$

$\dot{\theta}_{rz3r}$  $\dot{\theta}_{ry3r}$

$V_{rx3r}$

$\dot{\theta}_{rx3r}$

$V_{lz2l}$  $V_{ly2l}$

$\dot{\theta}_{lz2l}$  $\dot{\theta}_{ly2l}$

$V_{lx2l}$

$\dot{\theta}_{lx2l}$

$V_{lz1l}$  $V_{ly1l}$

$\dot{\theta}_{lz1l}$  $\dot{\theta}_{ly1l}$

$V_{lx1l}$

$\dot{\theta}_{lx1l}$

**FIG. 7**

FIG. 8

FIG. 9

FIG. 10

Europäisches
Patentamt
European
Patent Office
Office européen
des brevets

# EUROPEAN SEARCH REPORT

**Application Number**

EP 23 21 0219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/152478 A1 (JAGUAR LAND ROVER LTD [GB]) 23 May 2019 (2019-05-23) * paragraph [0061] – paragraph [0063] * * paragraph [0081] – paragraph [0086] * * paragraph [0116] – paragraph [0118] * * paragraph [0123] * ----- | 1-16 | INV. G01S13/60 G01S13/86 G01S13/931 B60W40/072 B60W40/076 G01S7/295 |
| Y | US 2019/163198 A1 (NIESEN URS [US]) 30 May 2019 (2019-05-30) * paragraph [0037] – paragraph [0038] * ----- | 1-16 | G01S13/62 G01C21/16 B60W40/10 |
| Y | US 10 386 461 B1 (BROWN ADAM [US] ET AL) 20 August 2019 (2019-08-20) * figures 2,3,5 * * column 7, line 1 – line 13 * * column 8, line 10 – line 65 * * column 11, line 5 – column 14, line 11 * ----- | 5-7 | |
| A | EP 3 375 694 A1 (HITACHI CONSTRUCTION MACH CO [JP]) 19 September 2018 (2018-09-19) * paragraph [0019] – paragraph [0026] * * paragraph [0056] – paragraph [0066] * ----- | 1-16 | |
| A | US 2008/059034 A1 (LU JIANBO [US]) 6 March 2008 (2008-03-06) * paragraph [0011] – paragraph [0015] * * paragraph [0045] – paragraph [0060] * ----- | 1-16 | TECHNICAL FIELDS SEARCHED (IPC) G01S G01C B60W |
| A | DE 10 2020 117529 A1 (FORD GLOBAL TECH LLC [US]) 7 January 2021 (2021-01-07) * paragraph [0023] – paragraph [0025] * ----- | 1-16 | |

-/--

The present search report has been drawn up for all claims

| Place of search | Date of completion of the search | Examiner |
|---|---|---|
| Munich | 9 April 2024 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Schön Steffen ET AL: "Internialnavigation: Mathematische Grundlagen", , 1 April 2017 (2017-04-01), XP093149155, Retrieved from the Internet: URL:https://www.ife.uni-hannover.de/en/research/main-research-focus/gnss-and-inertial-navigation [retrieved on 2017-04-14] * the whole document * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 9 April 2024 | Töpfer, Nils-Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 2 of 2**

# EP 4 556 952 A1

## ANNEX TO THE EUROPEAN SEARCH REPORT
## ON EUROPEAN PATENT APPLICATION NO.

EP 23 21 0219

This annex lists the patent family members relating to the patent documents cited in  the above-mentioned European search report.
The members are as contained in the European Patent Office EDP file on
The European Patent Office is in no way liable for these particulars which are merely given for the purpose of information.

09-04-2024

| Patent document cited in search report | | Publication date | Patent family member(s) | | Publication date |
|---|---|---|---|---|---|
| US 2019152478 | A1 | 23-05-2019 | AU | 2017245626 A1 | 22-11-2018 |
| | | | DE | 112017001905 T5 | 20-12-2018 |
| | | | GB | 2549105 A | 11-10-2017 |
| | | | US | 2019152478 A1 | 23-05-2019 |
| | | | WO | 2017174606 A1 | 12-10-2017 |
| US 2019163198 | A1 | 30-05-2019 | CN | 111356902 A | 30-06-2020 |
| | | | EP | 3717870 A2 | 07-10-2020 |
| | | | US | 2019163198 A1 | 30-05-2019 |
| | | | WO | 2019108579 A2 | 06-06-2019 |
| US 10386461 | B1 | 20-08-2019 | US | 9568592 B1 | 14-02-2017 |
| | | | US | 10386461 B1 | 20-08-2019 |
| EP 3375694 | A1 | 19-09-2018 | CN | 108137091 A | 08-06-2018 |
| | | | EP | 3375694 A1 | 19-09-2018 |
| | | | JP | 6473684 B2 | 20-02-2019 |
| | | | JP | 2017087997 A | 25-05-2017 |
| | | | US | 2018312170 A1 | 01-11-2018 |
| | | | WO | 2017081921 A1 | 18-05-2017 |
| US 2008059034 | A1 | 06-03-2008 | DE | 102007037513 A1 | 27-03-2008 |
| | | | GB | 2441420 A | 05-03-2008 |
| | | | US | 2008059034 A1 | 06-03-2008 |
| DE 102020117529 | A1 | 07-01-2021 | CN | 112172778 A | 05-01-2021 |
| | | | DE | 102020117529 A1 | 07-01-2021 |
| | | | US | 2021004983 A1 | 07-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040138802 A

- WO 2023169652 A1

**Non-patent literature cited in the description**

- **SANDEEP RAO**. Introduction to mmwave Sensing: FMCW Radars. Texas Instruments, 2017